# EUROPEAN PATENT SPECIFICATION

(11) **EP 1 516 543 B1**
(45) Date of publication and mention of the grant of the patent: **12.11.2008**
(21) Application number: 03425602.4
(22) Date of filing: 17.09.2003
(51) Int. Cl.: A23L 1/317

(54) **A meat-based food product and a procedure therefore**
Verfahren zur Herstellung von Produkten auf der Basis von Fleisch
Procédé de fabrication de produits à base de viande

(43) Date of publication of application: 23.03.2005
(73) Proprietor: S.p.A. Egidio Galbani, 20066 Melzo (IT)
(72) Inventor: Moraglia, Roberto c/o S.p.A. Egidio Galbani, 20149 Milano (IT)
(74) Representative: Long, Giorgio

(56) References cited:
- AU-A- 5 039 193
- FR-A- 2 753 881
- US-A- 3 037 870
- US-A- 3 589 915
- US-A- 4 378 379
- DATABASE WPI Section Ch, Week 199846 Derwent Publications Ltd., London, GB; Class D12, AN 1998-540589 XP002269299 -& RU 2 105 505 C (MOSC MIKOMS MEAT COMB STOCK CO), 27 February 1998 (1998-02-27)
- DATABASE WPI Section Ch, Week 198814 Derwent Publications Ltd., London, GB; Class D12, AN 1988-097166 XP002269300 -& SU 1 333 280 A (MEAT IND RES INST), 30 August 1987 (1987-08-30)

## Description

The present invention relates to a meat-based food product, in particular a pork sausage, and a procedure therefore .

Cooked ham, as is known, is a traditional and high quality delicatessen product. In its most common and most appreciated form, it is composed of anatomically complete or in any case, considerably sized pieces of meat that, after pressing and cooking in the oven in special moulds, form due to cohesion a single mass. Also the so-called reconstructed hams, normally used for stuffing, although constituted by more minute pieces of meat, are subject to a similar cooking and preparation process.

The traditional procedure, described briefly above, is in any case complex and delicate, especially in the pressing and cooking step that foresees the substantially manual operation of arranging the pieces of meat in the mould.

Australian patent application no. AU-A-50391/93 discloses a method of processing meat, whereby a sausage or roll produced with meat after processing has each individual piece of meat defined on the periphery by a colouring, thereby giving the meat a marbled effect.

Russian patent application RU 2105505 (Abstract) describes the production of a sausage by milling pork and high grade beef, mixing and maceration, with addition of salt, sodium nitrite, spices and protein component lean pork and soy protein isolate), injecting the obtained mass into skins and thermally treating.

U.S. Patent no. US 3,037,870 describes the preparation of tenderized meat by contacting meat with an aqueous solution containing a bacterial protease and a sodium phosphate.

Russian patent application SU 1333280 (Abstract) discloses a sausage obtained by mincing half fat pork, kneading it with brine and extruding the mixture into a casing, allowing the filling to mature, cooking and cooling.

It is accordingly an object of this invention to provide a procedure for preparing a pork sausage that is substantially simplified, yet maintains, in the product derived from it, the typical characteristics of a traditional cooked ham.

This object is achieved by a food product, in particular a pork sausage, and the procedure therefore, as outlined in the attached claims.

According to a particularly preferred embodiment of the invention, the food product is based on pork meat. Preferably, a mixture of fresh (refrigerated) meat and frozen meat is used, in appropriate proportions. More preferably, 80% by weight of fresh meat will be used.

The frozen meat is cut down and subsequently minced.

The fresh (or refrigerated) meat is firstly subject to a tenderising step , obtained by the passage under heads on which series of knives are mounted.

The fresh tenderised meat is then diced (i.e. reduced to discreetly sized pieces) and then subject to churning. This operation is a mechanical treatment of the meats with which one has both a massage and a collision of the pieces of meat with one another. Depending on whether one or the other of these two actions prevails churning by massage or by collision is obtained. During this churning step, the meat is subject to marinating with brine in order to make it reach the correct saline content. The brine preferably contains salt, spices, fragrances, ingredients and additives such as sodium nitrite, starch, carrageenan, hydrocolloids, dextrose, sodium erythorbate or ascorbate, in variable concentrations depending on the content of brine in churning and the dosage on the finished product. Generally the weight percentages of the brine are: salt 4.0-12.0%, sodium nitrite 0.03-0.10%, starch 2.0-5.0%, carrageenan and hydrocolloids 0.5-2.0%, dextrose 2.0-5.0%, sodium erythorbate or ascorbate 0.2-0.5%.

The introduction of brine in this step makes it possible for the meat to acquire the typical sapidity of cooked hams and at the same time obtain a mixture with the correct humidity for the subsequent cooking step .

The aims of churning are the following:
a) to permit a more rapid absorption and a more uniform distribution of the brine in the meat;
b) to extract a suitable quantity of saline-soluble proteins (actin, myosin, actomyosin) in order to facilitate cohesion between the pieces of meat;
c) to improve yields by reducing weight loss during cooking;
d) to maintain the succulence and improve the consistency, aroma and flavour.

The result of the churning is the formation of a creamy and sticky exudate (slime) formed by saline-soluble proteins, by fat and by a portion of brine water that covers the pieces of meat thus favouring the cohesion thereof.

Upon chemical analysis of the slime, the prevalence of proteins over fats must be detected, as if the contrary occurred, cohesion would be more difficult.

The churns normally used can be of the rotating cylinder or bell-type. Whereas the former provides a churning by massage or by massage-collision, the second allows for a typical churning by collision. The churns can operate continuously or intermittently, under vacuum or at atmospheric pressure.

The minced frozen meat and the churned fresh meat are then mixed together in the appropriate proportions. This operation is carried out in conventional-type kneading machines, consisting of tanks with rotating blade shafts.

Into the mixture may also be added additives and ingredients such as starch, dextrose, gelling agents (such as for example carrageenan or other hydrocolloids), antioxidants (sodium ascorbate or sodium erythorbate) and preservatives such as sodium nitrite, either dry or generally as brine.

Subsequently to the formation of the mixture, the latter is bagged in non-transpirant impermeable casings. Preferably, artificial casing in biaxially oriented polyamide and polyolefine multilayer is used. The operation is carried out by conventional-type bagging machines, which are not described in greater detail.

The use of non-transpirant impermeable casings makes it possible to avoid two rather complex operations typical of traditional cooked ham processing, in other words i) moulding in the typical moulds - an operation that requires, as mentioned previously, considerable expertise and is normally carried out manually - and ii) cooking in a steam-saturate environment. In actual fact, the casing makes it possible to maintain, inside the sausage mixture, the humidity conditions created by the introduction of the brine into the mixture of fresh meat, as described above, conditions that are normally obtained with the cooking of the hams in steam ovens. The steam oven will therefore no longer be necessary, in the same way the meat bagging step replaces the far more complex moulding operation. The result is a considerably simplified procedure compared to the traditional processing of cooked hams. At the same time, the organoleptic characteristics of the cooked ham are maintained, in particular with regards to the pinky colour, flavour and aroma.

Subsequent to bagging is the step of sausage cooking in dry air ovens. The cooking is generally carried out at a temperature of approximately 75°C until reaching approximately 67°C at the heart of the product.

The sausage is subject to showering with beating water and is finally chilled.

As a non-limiting example, the preparation of a sausage according to the procedure of the invention will be now described.

### EXAMPLE

A sausage according to the invention is prepared starting from 800 kg of fresh pork rump and from 200 kg of frozen pork shank.

The pork shank is cut down to the typical dimensions of a fist and is then minced by the passage in a set of plates and knives until it reaches dimensions of 0.9 mm.

The pork rump on the other hand is tenderised by passage under a series of knives and is then diced into pieces with sides of approximately 2 cm. The diced meat is then introduced into a rotating cylindrical churn and to it are added 450 kg of a brine having the following composition:

| | |
|---|---|
| water | 86.12% |
| salt | 5.00% |
| sodium nitrite | 0.05% |
| dextrose | 2.36% |
| fragrances | 2.90% |
| starch | 2.43% |
| hydrocolloid gelling agents | 0.76% |
| sodium erythorbate | 0.38% |

After churning, the fresh meat is kneaded with the frozen and minced shank and the whole thing is then bagged in 1kg, 2kg or 3kg pieces. The sausage is then cooked in a dry air oven at a temperature of 67°C at the heart of the product and an ambient temperature of 75°C and is finally showered and chilled.

The product thus obtained has a fat content of 2.5% by weight, a protein content of 16% by weight and a carbohydrate content of 2% by weight.

It is understood that that described is only one particular embodiment of the procedure of the invention, to which a man skilled in the art will be able to make small modifications in order to adapt it to specific requirements, without departing from the scope of the present invention.

## Claims

1. A procedure for preparing a meat-based food product, comprising the following operative steps :
a) subjecting the meat to dicing;
b) subjecting said diced meat to churning and simultaneous marinating with brine;
c) kneading said diced meat, after churning and marinating, with minced meat;
d) bagging said mixture obtained according to step c) in non-transpirant impermeable casing;
e) cooking in an oven the sausage obtained according to step d).

2. The procedure according claim 1, wherein said meat is pork meat.

3. The procedure according to claim 1 or 2, wherein said meat subject to dicing is fresh or refrigerated meat and said minced meat is frozen meat.

4. The procedure according to any of claims 1 to 3, wherein said diced meat and said minced meat are mixed in relative amounts of approximately 80% and 20% by weight, respectively.

5. The procedure according to any of claims 1 to 4, wherein said fresh or refrigerated meat is subject to tenderising prior to said dicing step .

6. The procedure according to any of claims 1 to 5, wherein said churning step is carried out in rotating cylindrical or bell-shaped churns.

7. The procedure according to any of claims 1 to 6, wherein said marinating is performed with a brine containing salt 4.0-12.0%, ingredients and additives such as sodium nitrite 0.03-0.10%, starch 2.0-5.0%, carrageenan and hydrocolloids 0.5-2.0%, dextrose 2.0-5.0%, sodium erythorbate or ascorbate 0.2-0.5%, the percentages being by weight on the brine.

8. The procedure according to any of claims 1 to 7, wherein said kneading step is carried out in a kneading machine with rotating blade shaft.

9. The procedure according to any of claims 1 to 8, wherein said mixture obtained according to step c) further comprises one or more ingredients chosen between starch, dextrose, gelling agents such as carrageenan, antioxidants such as sodium ascorbate or sodium erythorbate, preservatives such as sodium nitrite.

10. The procedure according to any of claims 1 to 9, wherein said non-transpirant impermeable casing is a multilayer of biaxially oriented polyamide and polyolefine.

11. The procedure according to any of claims 1 to 10, wherein said cooking step is carried out in a dry air oven.

12. The procedure according to any of claims 1 to 11, wherein said cooking step is carried out at an oven temperature of approximately 75°C and until the achievement of a temperature of 67°C at the heart of said sausage.

13. The procedure according to any of claims 1 to 12, wherein said sausage, after cooking, is subject to showering with driving water and chilling.

14. The procedure according to any of claims 1 to 13, wherein said meat in said step a) is diced into pieces with sides of approximately 2 cm.

## Patentansprüche

1. Verfahren zur Herstellung eines Nahrungsmittelproduktes auf der Basis von Fleisch, umfassend die folgenden Schritte:
a) Zerteilen des Fleisches in Würfel;
b) Rühren des in Würfel zerteilten Fleisches und gleichzeitiges Marinieren desselben mit Lake;
c) Durchkneten des in Würfel zerteilten Fleisches mit Hackfleisch nach dem Rühren und Marinieren;
d) Abfüllen der gemäß Schritt c) erhaltenen Mischung in eine nicht-transpirierende, impermeable Umhüllung;
e) Kochen der gemäß Schritt d) erhaltenen Wurst in einem Ofen.

2. Verfahren gemäß Anspruch 1, wobei das Fleisch Schweinefleisch ist.

3. Verfahren gemäß Anspruch 1 oder 2, wobei das in Würfel zu zerteilende Fleisch frisches oder gekühltes Fleisch und das Hackfleisch gefrorenes Fleisch ist.

4. Verfahren gemäß einem der Ansprüche 1 bis 3, wobei das in Würfel zerteilte Fleisch und das Hackfleisch in relativen Mengen von etwa 80% bzw. 20% des Gewichts vermischt werden.

5. Verfahren gemäß einem der Ansprüche 1 bis 4, wobei das frische oder gekühlte Fleisch vor dem Schritt des Zerteilens in Würfel tenderisiert.

6. Verfahren gemäß einem der Ansprüche 1 bis 5, wobei der Rührschritt in einem rotierenden zylindrischen oder glockenförmigen Rührbehälter durchgeführt wird.

7. Verfahren gemäß einem der Ansprüche 1 bis 6, wobei das Marinieren mit einer Lake durchgeführt wird, die 4,0-12,0% Salz enthält, 0,03-0,10% Zutaten und Zusatzstoffe wie Natriumnitrit, 2,0-5,0% Stärke, 0,5-2,0% Carrageen und Hydrokolloide, 2,0-5,0% Dextrose, 0,2-0,5% Natriumerythorbat oder -ascorbat, jeweils in Gewichtsprozenten der Lake.

8. Verfahren gemäß einem der Ansprüche 1 bis 7, wobei der Schritt des Durchknetens in einer Knetmaschine mit rotierender Schaufelwelle durchgeführt wird.

9. Verfahren gemäß einem der Ansprüche 1 bis 8, wobei die gemäß Schritt c) erhaltene Mischung außerdem eine oder mehrere Zutaten beinhaltet, die auswählbar sind aus Stärke, Dextrose, Gelbildungsmitteln wie Carrageen, Antioxidantien wie Natriumascorbat oder Natriumerythorbat, Konservierungsmitteln wie Natriumnitrit.

10. Verfahren gemäß einem der Ansprüche 1 bis 9, wobei die nicht-transpirierende, impermeable Hülle eine Mehrfachschicht von zweiachsig orientiertem Polyamid und Polyolefin ist.

11. Verfahren gemäß einem der Ansprüche 1 bis 10, wobei der Schritt des Kochens in einem Trockenluftofen durchgeführt wird.

12. Verfahren gemäß einem der Ansprüche 1 bis 11, wobei der Schritt des Kochens bei einer Ofentemperatur von etwa 75°C und so lange durchgeführt wird, bis eine Temperatur von 67°C im Kern der Wurst erreicht ist.

13. Verfahren gemäß einem der Ansprüche 1 bis 12, wobei die Wurst nach dem Kochen mit fließendem Wasser abgeduscht und abgekühlt wird.

14. Verfahren gemäß einem der Ansprüche 1 bis 13, wobei das Fleisch in Schritt a) in Stücke mit Seiten von etwa 2 cm Länge tenderisiert.

## Revendications

1. Procédure pour la préparation d'un produit alimentaire à base de viande, comprenant les opérations suivantes :
a) la soumission de la viande à une découpe en dés ;
b) la soumission de ladite viande découpée en dés à un brassage et à un marinage simultanés avec de la saumure ;
c) le pétrissage de ladite viande découpée en dés, après le brassage et le marinage, avec de la viande hachée ;
d) la mise sous enveloppe dudit mélange obtenu conformément à l'opération c) dans une enveloppe imperméable non transpirante ;
e) la cuisson dans un four de la saucisse obtenue conformément à l'opération d).

2. Procédure selon la revendication 1, dans laquelle ladite viande est de la viande de porc.

3. Procédure selon la revendication 1 ou 2, dans laquelle ladite viande soumise à une découpe en dés est de la viande fraîche ou réfrigérée et ladite viande hachée est de la viande congelée.

4. Procédure selon l'une quelconque des revendications 1 à 3, dans laquelle ladite viande découpée en dés et ladite viande hachée sont mélangées en quantités relatives d'environ 80 % et 20 % en poids, respectivement.

5. Procédure selon l'une quelconque des revendications 1 à 4, dans laquelle ladite viande fraîche ou réfrigérée est soumise à un attendrissement avant ladite étape de découpe en dés.

6. Procédure selon l'une quelconque des revendications 1 à 5, dans laquelle ladite étape de malaxage est exécutée dans des malaxeurs tournants cylindriques ou en forme de cloche.

7. Procédure selon l'une quelconque des revendications 1 à 6, dans laquelle ledit marinage est effectué avec une saumure contenant 4,0 à 12,0 % de sel, 0,03 à 0,10 % d'ingrédients et additifs tels que du nitrite de sodium, 2,0 à 5,0 % d'amidon, 0,5 à 2,0 % de carragénine et d'hydrocolloïdes, 2,0 à 5,0 % de dextrose, 0,2 à 0,5 % d'érythorbate ou d'ascorbate de sodium, les pourcentages étant en poids par rapport à la saumure.

8. Procédure selon l'une quelconque des revendications 1 à 7, dans laquelle ladite étape de malaxage est exécutée dans une machine de malaxage à arbre à pales tournant.

9. Procédure selon l'une quelconque des revendications 1 à 8, dans laquelle ledit mélange obtenu conformément à l'opération c) comporte en outre un ou plusieurs ingrédients choisis entre de l'amidon, de la dextrose, des agents gélifiants tels que de la carragénine, des antioxydants tels que de l'ascorbate de sodium ou de l'érythorbate de sodium, des conservateurs tels que du nitrite de sodium.

10. Procédure selon l'une quelconque des revendications 1 à 9, dans laquelle ladite enveloppe imperméable non transpirante est une pièce multicouches de polyamide et polyoléfine à orientation bi-axiale.

11. Procédure selon l'une quelconque des revendications 1 à 10, dans laquelle ladite opération de cuisson est exécutée dans un four à air sec.

12. Procédure selon l'une quelconque des revendications 1 à 11, dans laquelle ladite opération de cuisson est exécutée à une température du four d'environ 75°C et jusqu'à l'obtention d'une température de 67°C au coeur de ladite saucisse.

13. Procédure selon l'une quelconque des revendications 1 à 12, dans laquelle ladite saucisse, après la cuisson, est soumise à une aspersion par eau battante et à un refroidissement.

14. Procédure selon l'une quelconque des revendications 1 à 13, dans laquelle ladite viande, dans ladite opération a) est découpée en dés en morceaux d'environ 2 cm de côté.
